# EUROPEAN PATENT APPLICATION

(11) **EP 2 286 701 A1**
(43) Date of publication of application: **23.02.2011**
(21) Application number: 10169732.4
(22) Date of filing: 15.07.2010
(51) Int. Cl.: A47J 37/06

(54) **Food heating apparatus**

(30) Priority: 15.07.2009 IT MI20091260
(71) Applicant: Campo, Antonino, 21028 Travedona Monate (Varese) (IT)
(72) Inventor: Campo, Antonino, 21028 Travedona Monate (Varese) (IT)
(74) Representative: Ponzellini, Gianmarco

(57) **Abstract**

In a device for rapid heating of food products, a heating group (2) is operatively active on at least a food product (3); the heating group (2) is provided with heat radiating means destined to emit a radiation towards the food product. The presence of conveyor bodies enables directing the whole heat radiation along a radiating axis directly towards the product to be heated. The invention enables rapid heating, with contained costs, of foods of various types, in extremely short times.

## Description

The invention relates to a device for heating food products, as well as a control method applicable to the device.

As is known, the possibility of having a hot meal ready in a short time is often important in various situations: for example this could be a public place where a large number of users has to eat products such as sandwiches, toasted sandwiches, pizzas, pastries and like products (schools, motorway restaurants, railway station buffets and so on). The need to provide client satisfaction and keep up a high rate of productivity are therefore devisive in relation to preparation times of the various food products (eating and drinking), and especially important is the readying time for a hot food product.

Generally known-type devices for heating food products can be subdivided into two categories: the first category comprises all ovens, small ovens, toasters and like machinery which exploit heating elements powered by electrical resistances or gas, while the second category contains endogenous heat-producing ovens, also known as microwave ovens.

The two categories of known devices indicated above exhibit a series of defects, however, which render them poorly suitable for an efficient use in large-scale user situations as described above.

Focussing on electrical or gas ovens, it is notable that they require decidedly long operating times for heating up a food (typically these times are quantifiable in several minutes); this obviously has negative consequences in all those occasions in which many users have to be served rapidly.

Further, these types of ovens, in order to function at their best, have to be constantly maintained at a minimum temperature; this leads to a considerable increase in energy costs, at the same time influencing the working life and reliability of the machinery.

On the other hand, microwave ovens, though being extremely more rapid than gas or electric ovens, are also not free of drawbacks. Firstly, it has to be noted that these devices are extremely expensive, and also that the endogenous heating principle is not suitable for heating food subjects that are substantially lacking in water.

In reference to the latter above point, it can be observed that microwaves practically act on foods by causing agitation of the water molecules contained therein: if the microwave beam permeates a substance which is relatively abundant in water (such as for example a slice of cheese or salami) it will heat it or even cook it, while at the same time it will be much less effective on a substance poor in water content (such as for example a slice of bread); in practice this is translated into a considerable limitation of operating flexibility (consider for example the fact that microwave ovens cannot be satisfactorily used as a toaster).

With the aim of obviating the above-described situation, the proprietor invented and developed a heating device for food products, which combines high heating speed for foods or drinks with a low running cost and a greater operating flexibility.

In particular, a device has been realised which by means of a heat radiating group and an electronic control board managed by a microcontroller will make it possible to reduce heating times as much as possible, and does not require pre-heating before use (nor does it require maintaining at a minimum operating temperature), and can also be advantageously used as a toaster.

The device briefly described herein above, which is the object of European patent EP 1417915, while guaranteeing excellent heat and energy performance, has however shown itself to be liable to improvement in some specific aspects thereof.

In the first place the ergonomics of the device, but also its modes of housing and extracting the heated product, have exhibited some drawbacks which have limited its use in commercial contexts.

Further, the geometric conformation of the frame and the positioning of the lamps has been shown to be subject to improvement in order to provide the final user with a product which is easy and intuitive to operate but which also maintains the special characteristics of the previously-designed heating device.

In this situation the technical objective underpinning the present invention is to substantially obviate the above-described drawbacks.

An aim of the invention is to realise a heating device which is easy and intuitive to use, and which does not require substantial modifications in use modalities by the manager of the business with respect to traditional food-heating apparatus.

A further aim is to enable optimal radiation of the product without causing any discomfort to the users while maintaining high thermal efficiency. Finally, a further aim of the invention is to make available a safe apparatus from both the point of view of the electrical/electronic circuitry and in terms of risks of injury for the user.

The set technical objective and the specified aims are substantially attained by a device for heating food products having the characteristics reported in one or more of the appended claims.

A first aspect of the invention comprises a device for heating food products which comprises a box body exhibiting an access opening destined to enable insertion of a food product, in particular in an insertion direction which is substantially horizontal in use conditions of the device; a heating group operatively activatable on at least the food product that is insertable in the box body, the heating group comprising heat radiating means destined to emit a heat radiation towards the food product, and a support element substantially arranged horizontally in use conditions of the device and exhibiting a perimeter edge, the support element restingly receiving the food product following insertion thereof into the device via the access, the support element being made at least partially of a material which is transparent to heat radiation; the support element being in particular a support grill; the heat radiating means comprising at least a lamp positioned superiorly with respect to the support element and at least a further lamp positioned inferiorly of the support element; the further lamp being positioned laterally with respect to the vertical projection of the perimeter edge of the support element on a base of the box body.

In a further aspect, in accordance with the preceding aspect, the radiating means further comprise at least a conveyor body acting on the heat radiation of the further lamp in order to direct it towards the support element; the conveyor body is configured such as to direct the heat radiation inclinedly with respect to the vertical in device use conditions. In a further aspect, in accordance with the preceding aspect, the conveyor body acting on the heat radiation of the further lamp is positioned substantially laterally with respect to the vertical projection of the perimeter edge of the support element on a base of the box body, in particular a lower terminal portion of the conveyor body being located below the support element.

In a further aspect, in accordance with any of the preceding aspects, a substantially central portion of the area defined by the vertical projection of the perimeter edge of the support element on a base of the box body is not occupied by lamps, in particular the whole area defined by the vertical projection of the perimeter edge of the support element on a base of the box body not housing lamps.

In a further aspect, in accordance with any one of the preceding aspects, a substantial central portion of the area defined by the vertical projection of the perimeter edge of the support element on a base of the box body is not occupied by any conveyor body active on the heat radiation.

In a further aspect, in accordance with any of the preceding aspects, the conveyor body active on the heat radiation of the further lamp exhibits a section profile exhibiting two reflecting tracts, a first reflecting tract located superiorly with respect to the further lamp and a second reflective tract located inferiorly with respect to the further lamp, in particular the first reflective tract having a greater length than the second reflective tract, the conveyor body optionally exhibiting a section profile that is substantially parabolic.

A description of two preferred embodiments will now be described byway of non-limiting example of a device for heating food products according to the invention, illustrated in the accompanying figures of the drawings, in which:
figures 1 a and 1 b respectively show a perspective view and a view of the fame of a heating device for food products according to the present invention;
figures 2, 3a and 3b are schematic views of some components of the device of figure 1; and
figures 4a and 4b are schematic views of two possible embodiments of a device of the invention.

With reference to the figures of the drawings, the device of the invention is denoted in its entirety by number 1.

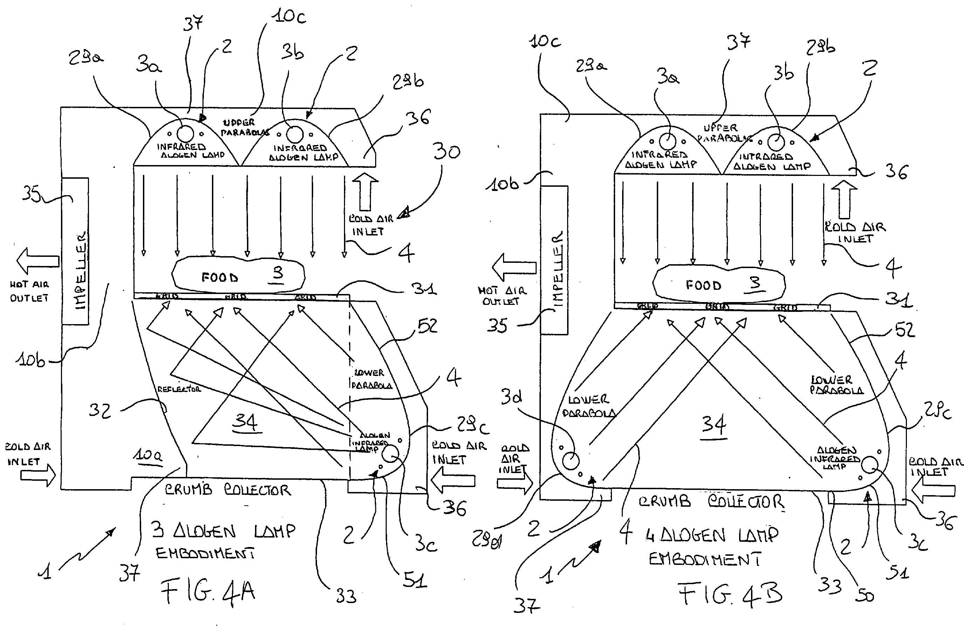

Looking in particular at figures 4a and 4b, the invention is substantially composed of a heating group 2, which is operatively activatable on a food product 3.

In a particularly advantageous characteristic of the present invention, the heating group 2 comprises heat radiating means, which are mainly destined to emit a heat radiation 4 towards the food product 3.

The heat radiation 4 emitted by the heat radiating means can advantageously be absorbed by the food product 3, which in this way receives a considerable amount of heat energy by radiation. Thanks to the characteristics of the present invention, the heat radiation 4 directed onto the food product 3 exhibits a wavelength field comprising the whole visible light spectrum (even if, should a particular case require it, a broader or narrower wave length field could be used, for example extending up to the infrared rays and/or ultraviolet rays).

With the aim of guaranteeing the correct range in wave length of the radiation spectrum, the heat radiating means comprise at least a lamp, for example a halogen lamp 3a, 3b, 3c, 3d, which substantially diffuses visible light and infrared radiation.

In the present invention, differently to traditional ovens, the food product is heated exclusively by radiation, while heating by convection or by agitating the water molecules is substantially excluded.

In other words, no electrical resistances or the use of microwave devices are comprised.

Instead, by exploiting the characteristics of the invention, and especially the characteristics of the embodiment described herein below, much shorter heating times can be obtained with respect to typical times of electric ovens (and comparable to the times of microwave ovens), without being subject to costs and energy consumption of ovens using endogenous heating.

With the aim of maximising this physical phenomenology, the heat radiating means are operatively active along a respective radiating axis; the food product 3 can be positioned in a convenient point of the radiating axis such as to receive the heat radiation 4 in the best possible conditions.

In the embodiment illustrated in figure 4a (preferred embodiment), the radiating means comprise two upper halogen lamps 3a, 3b which emit respective heat radiations conveyed by reflector elements 29a 29b along a preferential axis of radiation which practically coincides with a vertical direction which departs from the two lamps 3a, 3b towards a support element 31.

With the aim of maximising the incident radiation density on the food product 3, the heat radiations singly emitted by the two lamps 3a, 3b are directed parallel along a same radiating axis, such that the food product 3 is reached at every point thereof by the same quantity of radiation, as much as possible preventing localised zones with excessive heating which can cause the product to burn.

In this context, note that the shaping of the parabolas 29a, 29b plays a very important role in preventing localised heating of the product.

As already mentioned, and once more with the aim of maximising operating efficiency, the radiating means further comprise a predetermined number of conveyor bodies, which are active on the heat radiation 4 in order to direct it and/or concentrate it along the radiating axis.

The conveyor bodies can advantageously operate according to traditional optical principles, acting on a heat radiation 4 which is practically composed of the broad-spectrum light emitted by the halogen lamps 3a, 3b, 3c, 3d.

In more detail, in the non-limiting embodiment illustrated herein, the conveyor bodies are constituted by reflector parabolas 29a, 29b, 29c, 29d, each of which is associated to a respective halogen lamp 3a, 3b, 3c, 3d.

In particular the shape of the parabolas is obtained by an enveloping of flat rectangular or square surfaces, appropriately folded.

Each halogen lamp 3a, 3b , 3c, 3d is advantageously positioned at the focal point of the respective reflector parabola 29a, 29b, 29c, 29d such that the light/radiating beam exiting from the parabola (the totality of rays emitted by the lamp) is substantially parallel once reflected. In other words, by exploiting the particular arrangement between the lamp 3a, 3b, 3c, 3d and the parabola 29a, 29b, 29c, 29d, a volume is created in the device 1 which is substantially occupied by a practically-coherent radiation (i.e. the wave fronts of which propagate preferentially along a same direction); clearly, in the case illustrated in figure 4a, the two radiating beams coming from the two upper lamps 3a and 3b will have a single preferential vertical propagation direction, while the radiating beam coming from the lower lamp 3c will be directed in an inclined sense with respect to the vertical in order that it can also impact on the food.

In detail, the beam will be reflected by the parabola 29c located behind the lamp 3c and a part thereof will directly reach the product; vice versa, the part of rays having a low inclination with respect to the horizontal will be further reflected by an additional reflector surface 32 (also parabolic) in order that these rays too are conveyed onto the food, thus increasing the thermal efficiency of the device.

The absence of the lamp 3d at the lower side opposite the access opening 30 prevents a direct radiation from exiting from the opening and annoying the operator as well as wasting heating energy.

Differently, the embodiment of figure 4b comprises a further lamp 4d located inferiorly and laterally with respect to the food to be heated and is provided with a respective rear parabolic reflector surface 29d.

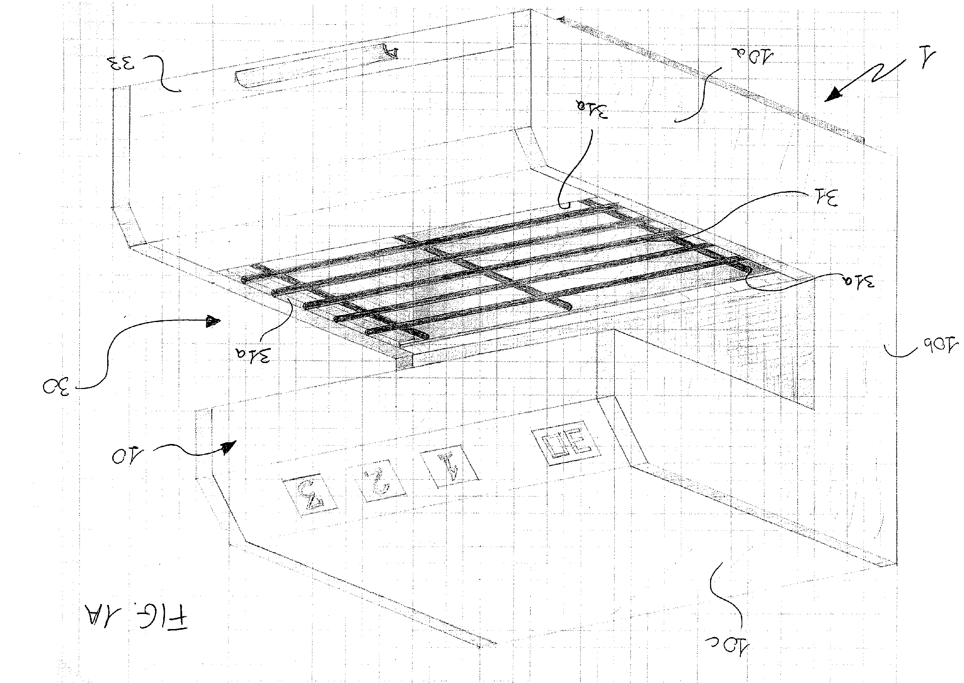

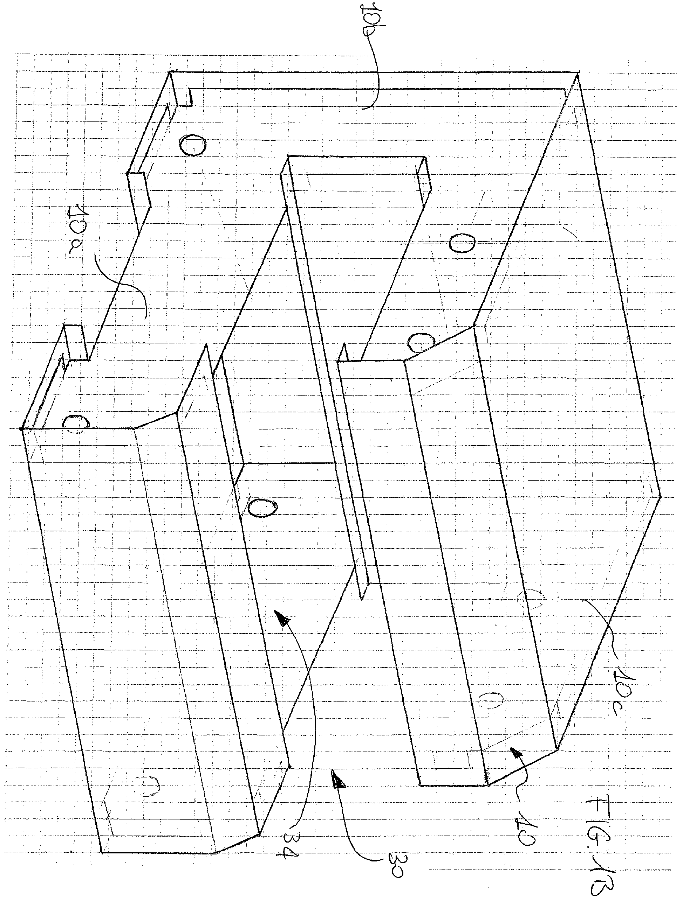

The box body 10 which defines the frame of the device (illustrated in figures 1a and 1b) exhibits a frontal access opening 30 delimited superiorly by a portion of covering 10c and inferiorly by a base 10a of the box body 10.

The food product can be introduced into the device through the opening 30.

As can be noted from the figures, there is also a support element 31 for the food product; this defines a rest surface that is substantially flat in use conditions of the machine and is destined to receive the food to be heated.

With the aim of enabling absorption of the heat radiation 4 by the product 3, the support element 31 is conveniently at least partially transparent to the heat radiation 4; for example, the container body 4 can be constituted by a metal grill, or by a container made of Pyrex or glass or the like. Certainly however the grill is the preferred embodiment as it enables any food residues to fall towards the bottom of the device where they can be collected and removed thanks to an extractable mobile tray 33 for enabling cleaning of the device.

The use of a glass or Pyrex plate will not only cause the plate to heat considerably due to the radiation (and thus becoming risky for the safety of the operator as it at least partially accessible through the opening 30) but also to retain the residues of food that are heated and can burn causing unpleasant odours or even catching fire.

It is further to be noted that in the device for rapidly heating the food products, the external box body 10 is destined to contain the heat radiating means and the respective conveyor bodies.

In particular, the box body 10 is destined to prevent access to the elements, and also functions as a protection element of the elements, making the whole apparatus transportable.

The box body, well visible in figures 1 a and 1 b, substantially exhibits a C-shape such as to define a housing cavity for the product, wherein the metal grill 31 is located.

The box body 10 is therefore constituted by a base 10a which defines the housing chamber 34 that contains the lamp 3c (and possibly 3d) and the parabola 29c (and possibly 29d) and is superiorly delimited by the element 31 and inferiorly by the tray 33.

There is also a rear structure 10b emerging from the base 10a, from a top of which departs a covering portion 10c which houses the two upper lamps 3a and 3b and the respective reflectors.

In figures 4a and 4b, also note the use of a cooling fan 35 destined to enable aspiration of ambient air via inlets 36 located respectively in the covering portion 10c and the base 10a in such a position that the air flow invests the parabolas and other metal parts subjected to heating before reaching the fan 35 in order to be expelled from the rear structure 10b. The functioning of the device of the present invention can advantageously be adapted to a very broad range of products, given that the heating effect by radiation heats the products in short times, and given that the heat radiation 4 arrives almost entirely on the food product 3 (also thanks to a suitable choice of the geometry of the reflector element and the position of the lamp).

Equally advantageously, the functioning of the device 1 can be made completely automatic, such as to leave the user only the task of inserting the food to be consumed in the special container chamber.

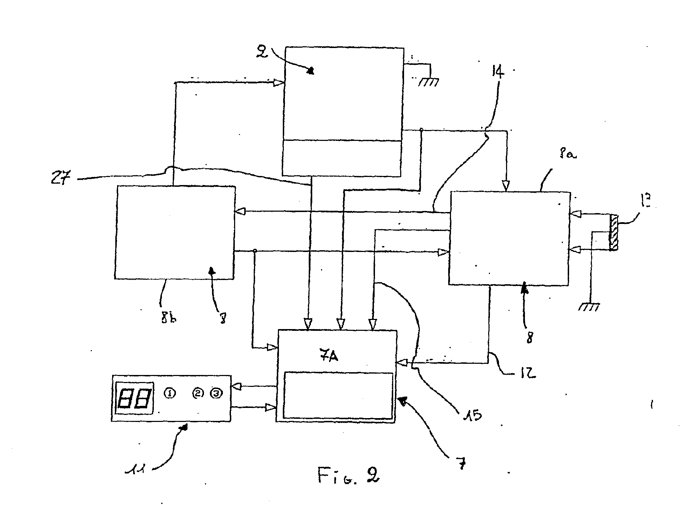

In order to attain the technical aims described above (observe in particular figure 2), management and control means 7 can be provided, operatively connected at least to the radiating means (or heating group 2) and/or to the container body 5 in order to determine respective operating conditions. In more detail, the management and control means 7 are active on the radiating means in order to determine activating times and/or intensity of energy supplied and/or intensity of radiated energy and/or heat profiles associable to predetermined food products.

Using an input/output unit 11 it will be possible to activate/deactivate the device and possibly select the heating profile to be applied to the food to be heated (as will be more fully explained herein below); the input/output unit will also be provided, for example, with a display able to visualise the time required for heating (for example in units of seconds) and possibly able to visualise further information relating to the optimal functioning or malfunctioning of the whole device.

The correct choice of operating parameters according to the type of food product 3 is obtained via a logic control unit 7a, functionally and structurally contained within the management and control means.

The logic unit 7a typically exhibits a micro-controller, one or more memories (for example ROM or EEPROM according to needs or requirements) connected by circuitry to the micro-controller and containing an operating program and/or a plurality of functioning profiles associable to predetermined food products; also present is a plurality of measuring elements connected by circuitry (line 27 in figure 2) to the micro-controller in order to detect all the data required for controlling the functioning of the device 1 (for example, operating times and/or temperatures and/or electricity values).

To guarantee the necessary supply of electrical energy, an energy supply group 8 is used, which is operatively connected to the heat radiation group, the management and control means 7 and possibly the container body 5 in order to provide the necessary supplies.

The energy supply group 8 is connectable to an electrical grid 13 (for example the usual alternating current supply) and comprises in greater detail a supply circuit 8a, connectable directly to the electricity grid (see figure 2 again). The supply circuit 8a advantageously sends the supply signal 15 to the logic control unit 7A and can comprise a synchronising sub-group 18, destined to generate a synchronisation signal 12 (sendable as an interrupt signal to the logic control unit, usable for regulating the activity of the halogen lamps 3a and/or timing functions), and an emergency sub-group destined to enter into function in a case of malfunctioning. Finally, a control circuit of the electrical power 8b is also comprised, connected to the supply circuit 8a from which it receives electrical energy, for example an AC 220V signal 14, which provides the supply source to the management and control means 7.

In more detail, observe how in the illustrated embodiment the micro-controller of the logic control unit 7A is constituted by one or more chips, which can advantageously bear (with any degree of integration) the typical elements of a computerised structure, such as for example RAM, ROM, EPROM, EEPROM memories, timers, analog/digital converters, and so on; in particular, an EEPROM memory can be present, which contains all the data required for performing a heat profile information on a given food product.

Note that the expression "heat profile" relates to a particular combination of switching on/off and modulation of the halogen lamp or lamps 3a, for a determined time and/or a determined current intensity; in this way the right quantity of heat radiation 4 can be advantageously associated to each food product 3, taking due account of the characteristics and the dimensions of the substance the food is composed of.

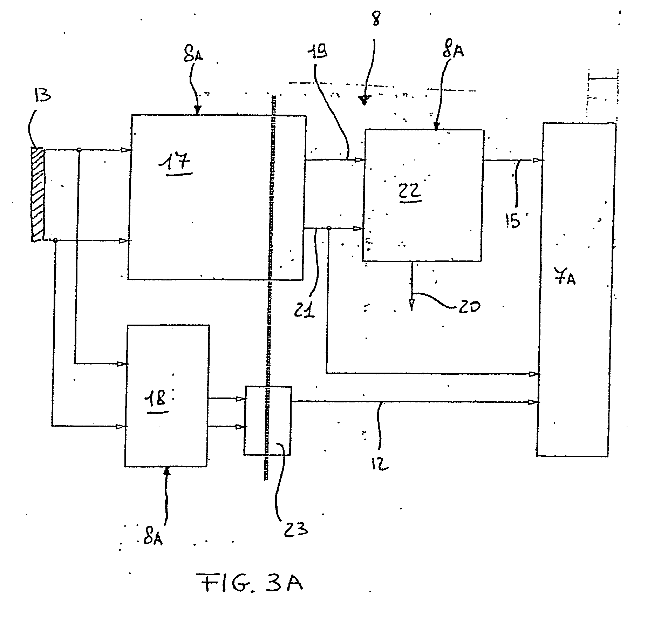

The supply circuit 8a (figure 3a) is conveniently isolated from the other sensitive elements of the device, as well as the eventual user, by means of appropriate safety systems; in particular, a transformer 17 can be present, interposed between the electric supply grid 13 and the logic control unit 7A.

In particular, the transformer 17 will be capable of enabling conversion from 220V AC, applied to the primary coils, to a value for example comprised between 9 VAC and 24VAC available on the secondary winding.

In particular, the alternating current supply at 24V denoted by 19 and the earth line 21 will enter a card 22 provided for the generation of the above-mentioned tension 15 for low-tension supply in direct current destined to the logic control group 7A which will possibly generate a 24V tension in direct current destined to move the basket or container body 5.

Also worthy of note is the fact that the synchronising sub-group 18 is galvanically insulated by a suitable opto-isolator 23 as regards the synchrony signal 12.

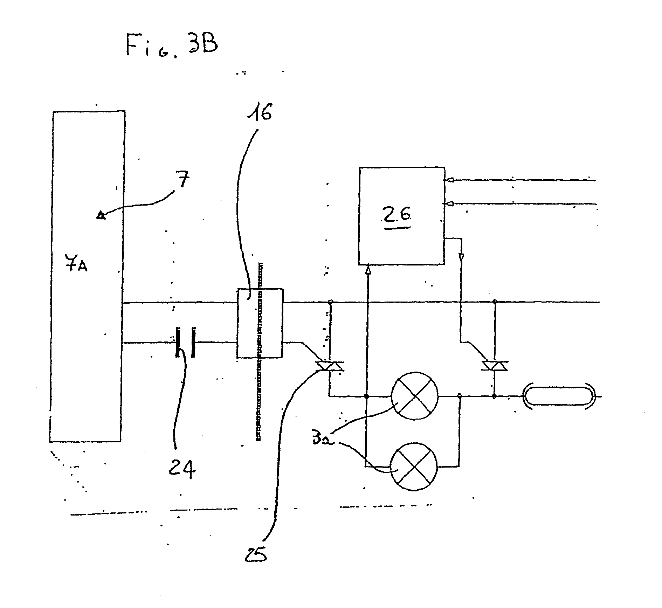

The control circuit of the electrical power 8b, illustrated in figure 3B, is able to control the supply to the halogen lamps by closure of a TRIAC 25 following an appropriate pulse signal coming from the logic control unit 7a.

The power control circuit contains an emergency device 26 (autonomously supplied) which produces the overall switching-off of the food-heating device should an accidental breakage of the primary TRIAC 25 force uninterrupted supply to the halogen lamps.

It is also worthy of note that this type of intervention does not enable the external user any possibility of resetting, which means that repair will have to be performed in a service centre.

These types of faults, temporally permanent, would lead to an uncontrolled and dangerous raising of the temperature internally of the food-heating device.

Still on the subject of functioning safety, in the illustrated embodiment a safety element 24 (which in the illustrated embodiment is a condenser) is present between the heat radiating means and the logic control unit 7A; this safety element prevents accidental faults in the logic control unit from translating into uncontrolled switching-on of the lamps 3a.

Finally, an opto-isolator 16 is present, operatively interposed between the logic control unit 7A and the primary TRIAC 3a.

In a particular functioning mode of the present device 1 the food products 3 are contained in appropriate pre-packing means 9 (which in other words are packages associable to a food product 3); these pre-packing means 9 comprise a protective packing destined to receive the food product 3 and a labelling element (which in turn will be for example an electronically readable code associated to the protective packing and/or to the food product) singly related to a predetermined type of food product 3. In this way, during automated functioning of the device 1, the logic control unit can, by means of special and conventional recognition means (for example optic readers) exactly detect the product loaded and associate the correct heating profile thereto.

The device of the present invention can advantageously operate in a special automatic or manual procedure for heating food products; the automatic procedure comprises only the introduction of the food product into the heating chamber, the activation of the heating being done automatically following the optical recognition of the type of product and the consequent selection of the most suitable heating profile.

Manual functioning, on the other hand, comprises the introducing of the food product into the heating chamber and manual selection of the heating profile by pressing on selecting pads.

In both modes the control unit will maintain a minimum radiation for a predetermined time (for example 30 seconds) on the food product after the preparation time has concluded, in order to prevent any involuntary cooling of food should there be a delay in extracting it.

The invention attains important advantages.

Firstly, the special constructional architecture of the operating heart of the invention enables very much shorter heating times that those of electrical or gas ovens, while at the same time the need for performing pre-heating operations is substantially done away with. Further, the transfer of heat energy of the present invention is equally efficient on any type of food substance (solid, liquid, moist or dry and so on), such that it is possible to obtain extremely satisfactory results in various applications (food-heating, drink-heating, toasting and so on).

Also noteworthy is the fact that while reaching a high degree of efficiency with short preparation times, the present device is simple to realise, as well as easy to maintain; thus high buying and plant management costs, as in microwave plants, are avoided, while the advantageous aspects are maintained.

Secondly, thanks to its characteristics, the device of the invention can advantageously be easily integrated into automatic dispenser plants, where it can operate with high degrees of efficiency and reliability, but a special quality is that it is "dedicated" to each different type of product. Also worthy of note is the fact that the optimisation of the control of the radiating group means that many factors can be taken into account, and thus it can reach high energy savings levels, as well as excellent savings in terms of wear management on the heating elements, to the advantage of buying, management and maintenance costs.

A final point of importance is that the use of the present device enables the food to be heated with its plastic packaging, in full respect of the hygiene standards and with the further advantage of not dirtying the internal parts of the device.

The average consumption is around 2000 watts, exclusively relating to the food preparation time, as there is no need for preheating.

Last but not least, the particular dimensions of the object, as well as its weight, enable easy transport thereof and simple installation. Furthermore, the access to the support element for positioning the food product to be heated is easily attainable by the operator, who must simply insert and rest the product on the grill.

Also the positioning of the lamps is optimised, thus guaranteeing on the one hand the safety of the device and on the other hand an optimal heat efficiency and the possibility of uniformly heating the product.

The presence of the tray enables easy removal of the food residues.

## Claims

1. A device for heating food products, comprising:
a box body (10) exhibiting an access opening (30) destined to enable insertion of a food product (3), in particular in a substantially horizontal insertion direction in use conditions of the device;
a heating group (2) operatively activatable on at least the food product (3) insertable in the box body (10), the heating group (2) comprising heat radiating means destined to emit a heat radiation (4) towards the food product (3), and
a support element (31) arranged substantially horizontally in use conditions of the device and exhibiting a perimeter edge (31a), the support element (31) restingly receiving the food product following insertion thereof in the device via the access (30), the support element (31) being made at least partially of material that is transparent to heat radiation (4), the support element (31) being in particular a support grill,
the heat radiating means comprising at least a lamp (3a, 3b) positioned superiorly with respect to the support element (31) and at least a further lamp (3c, 3d), positioned inferiorly of the support element (31),
**characterised in that** the further lamp (3c, 3d) is positioned laterally with respect to the vertical projection of the perimeter edge (31 a) of the support element (31) on a base of the box body (10).

2. The device of claim 1, wherein the radiating means further comprise at least a conveyor body (29c) active on the heat radiation (4) of the further lamp (3c) in order to direct the heat radiation (4) towards the support element (31), the conveyor body (29c) being configured such as to direct the heat radiation (4) in an inclined direction with respect to a vertical in use conditions of the device.

3. The device of claim 2, wherein the conveyor body (29c) acting on the heat radiation (4) of the further lamp (3c) is positioned substantially laterally with respect to the vertical projection of the perimeter edge (31 a) of the support element (31) on a base of the box body (10), in particular a lower terminal portion (50) of the conveyor body (29c) being located below the support element (31).

4. The device of any one of the preceding claims, wherein a substantial central portion of an area defined by a vertical projection of the perimeter edge (31 a) of the support element (31) on a base of the box body (10) is not occupied by lamps, in particular a whole area defined by the vertical projection of the perimeter edge (31 a) of the support element (31) on a base of the box body (10) not housing lamps.

5. The device of any one of the preceding claims, wherein a substantial central portion of the area defined by the vertical projection of the perimeter edge (31 a) of the support element (31) on a base of the box body (10) is not occupied by any conveyor body active on the heat radiation (4).

6. The device of claim 2 or 3, wherein the conveyor body (29c) active on the heat radiation (4) of the further lamp (3c) exhibits a section profile exhibiting two reflecting tracts (51, 52), a first reflecting tract (51) located superiorly of the further lamp (3c) and a second reflecting tract (52) located inferiorly with respect to the further lamp (3c), in particular the first reflecting tract (51) exhibiting a greater length than the second reflecting tract (52), the conveyor body (29c) optionally exhibiting a substantially parabolic profile section.

7. The device of any one of the preceding claims, **characterised in that** the radiating means further comprise at least a reflecting surface (32), for example parabolic, destined to convey rays originating from the further lamp (3c, 3d) located inferiorly towards the food to be heated, the reflective surface (32) being positioned inferiorly with respect to the support element (31) and on an opposite side to the further lamp (3c, 3d) with respect to the support element (31).

8. The device of any one of the preceding claims, **characterised in that** the radiating means comprise a further lamp (3d) located inferiorly and laterally with respect to the vertical projection of the perimeter edge (31 a) of the support element (31) on a base of the box body (10) and on an opposite side with respect to the inferiorly-located further lamp (3c)

9. The device of any one of the preceding claims, **characterised in that** the heat radiating means comprise at least two lamps (3a, 3b) positioned superiorly of the support element (31), and further comprise a predetermined number of conveyor bodies, the conveyor bodies being active on the heat radiation (4) in order to direct it substantially parallel to the radiating axis, the conveyor bodies in particular comprising a predetermined number of reflector elements (29a, 29b, 29c, 29d), each reflector element (29a, 29b, 29c, 29d) being preferably associated to a respective lamp (3a, 3b, 3c, 3d), the lamps positioned superiorly of the support element (31) being destined to convey the radiation in a parallel direction, perpendicular to the support element (31).

10. The device of any one of the preceding claims, **characterised in that** the box body (10) exhibits a C-shape, the access opening (30) defining an opening of the C-shape, the box body in particular comprising a base (10a) from which a rear structure (10b) emerges, from which in turn a portion of covering (10c) departs, the C-shaped box body (10) in particular being rigid, the base (10a), the portion of covering (10c) and the rear structure (10b) being rigidly constrained to one another.

11. The device of claim 2 or 3, **characterised in that** it comprises cooling means including a fan (35), for example an air aspiration fan, located at a rear structure (1 0b) of the box body, at least two inlets for air (36) located at a base (10a) and a portion of covering (10c) of the box body (10), and conveyor channels (37) from the inlets towards the fan (35), destined to enable a passage of air in proximity of the parabolas and a cooling by convection of the parabolas and any metal elements which can come into contact with a user.

12. The device of any one of the preceding claims, **characterised in that** it further comprises at least an extractable tray (33) located below the support element (31) and laterally flanked by at least a lamp (3c, 3d), in order to receive any residues of the food and enable removal thereof.

13. The device of any one of the preceding claims, **characterised in that** the radiating means comprise one or more halogen lamps (3a, 3b, 3c, 3d), the halogen lamps emitting respective heat radiations that are substantially directed parallel to the radiating axis thereof and preferably in directions and senses running, in a case where there is more than one lamp, towards a single meeting zone, the food product (3) being even more preferably positionable in the meeting zone.

14. The device of any one of the preceding claims, **characterised in that** the radiating means further comprise a predetermined number of conveyor bodies, the conveyor bodies being active on the heat radiation (4) in order to direct the heat radiation (4) substantially parallel to the radiating axis, the conveyor bodies in particular comprising a predetermined number of reflector elements (29a, 29b, 29c, 29d), each reflector element being preferably associated to a respective halogen lamp.

15. The device of claim 14, **characterised in that** each reflector element (29a, 29b, 29c, 29d) exhibits a substantially parabola-shaped surface, the parabola in particular being defined by an enveloping of flat square or rectangular surfaces, at least a halogen lamp being positioned along a focus of the parabola.
